# EUROPÄISCHE PATENTSCHRIFT

(11) **EP 1 810 904 B1**
(45) Veröffentlichungstag und Bekanntmachung des Hinweises auf die Patenterteilung: **07.07.2010**
(21) Anmeldenummer: 06111298.3
(22) Anmeldetag: 17.03.2006
(51) Int. Cl.: B60T 8/40, F04B 53/10

(54) **Fördervorrichtung**
Pump device
Dispositif de pompe

(30) Priorität: 01.04.2005 DE 102005015298
(43) Veröffentlichungstag der Anmeldung: 25.07.2007
(73) Patentinhaber: Continental Teves AG & Co. oHG, 60488 Frankfurt am Main (DE)
(72) Erfinder: Hinz, Axel, 61267 Neu-Anspach (DE); Vogel, Günther, 63303 Dreieich (DE); Greiff, Uwe, 61352 Bad Homburg (DE); Lenz, René, 60599 Frankfurt/M (DE); Köhler, Christoph, 65779 Kelkheim (DE)

(56) Entgegenhaltungen:
- EP-A- 1 707 465
- WO-A-94/12789
- DE-A1- 19 732 771
- DE-A1- 19 829 124
- DE-C- 883 562
- GB-A- 190 928 983

## Beschreibung

Die Erfindung betrifft eine Fördervorrichtung einer Fahrzeugbremsanlage nach dem Oberbegriff des Patentanspruchs 1.

Fördervorrichtungen für Fahrzeugbremsanlagen sind grundsätzlich bekannt. Eine teilweise aus Stanz- und Blechformteilen aufgebaute Fördervorrichtung mit Rückschlagventilen geht aus der DE 197 32 771 A1 hervor. Dabei ist der Ventilsitz eines Druckventils einstückig und als Blechstanzteil ausgebildet. Der Ventilsitz ist durch eine Verstemmung auf einer Laufbuchse oder in einem Aufnahmekörper befestigt. Dies ermöglicht eine grundsätzlich kostengünstige Herstellung. Besonders dünnwandige Blechstanzteile verfügen jedoch über eine Neigung zu Verzug. Diese Neigung wird durch nachfolgende Verstemmprozesse des Ventilsitzes verstärkt. Ein unkontrollierter Verzug kann bei dichtigkeitsrelevanten Bauteilen - wie insbesondere einem Ventilsitz - nicht toleriert werden. Um eine erhöhte Ausschussquote zu vermeiden, scheint daher ein besonderer Qualitätssicherungsaufwand, auch bei der Auswahl und Herstellung des Werkstoffes erforderlich.

Aus der GB 28983 A A.D.1909 geht bereits eine Fördervorrichtung der gattungsbildenden Art hervor, die zwischen einem Pumpenzylinder und einem den Pumpenzylinder verschließenden Deckel entlang einer Mantelfläche einen Ventilsitz mit mehreren über den Umfang des Ventilsitzes angeordnete Ventilöffnungen aufweist, die von einem ringförmigen, elastisch vorgespannten Ventilring druckabhängig verschließbar als auch freigebbar sind.

Ferner ist aus DE 198 29 124 A1 bereits ein Druckventil bekannt, das aus einem nutförmigen Ventilsitz und einem als O-Ring ausgeführten, elastischen Schließkörper besteht, der in der am Umfang eines Hohlzylinders umlaufenden Nut des Ventilsitzes eingelegt ist. Die Nut ist von mehreren Ventilbohrungen durchdrungen, die von dem elastischen Schließkörper verschlossen sind, solange dieser nicht durch den im Hohlzylinder herrschenden Druck radial nach außen gedehnt und vom Ventilsitz abgehoben wird.

Der Erfindung liegt die Aufgabe zu Grunde, eine vereinfachte Fördervorrichtung mit einem vereinfachten Rückschlagventil bereit zu stellen, welches unter Verwendung von Kaltschlag-Herstellungsverfahren ohne besonderen Aufwand verzugsfrei ausbildbar ist.

Die Aufgabe wird durch die kennzeichnenden Merkmale des Anspruchs 1 gelöst, wonach der Ventilsitz aus mehreren Ventilsitzsegmenten zusammengefügt ist. Segmentierte Ventilsitze unterliegen einem reduzierten Verzugsrisiko. Soweit überhaupt Verzug auftritt, bleibt dieser partiell auf das jeweilige Ventilsitzsegment beschränkt. Die übrigen Segmente sind von diesem partiellen Verzug weitgehend unbeeinflusst. Außerdem wird der zusätzliche Vorteil erzielt, dass sich mehrere Bauteile nach Art eines Fachwerkes gegenseitig verstärken können, so dass tendenziell weniger Werkstoff eingesetzt werden muss. Es wird die Möglichkeit eröffnet, unterschiedliche Werkstoffe zu verwenden. Durch Verwendung verbesserter Werkstoffe kann beispielsweise das Verschleißverhalten optimiert werden, ohne den Ventilsitz jeweils einstückig aus demselben Werkstoff ausbilden zu müssen.

Die Segmentierung erstreckt sich Erfindungsgemäß auf eine Auflagefläche für den Ventilkörper. Die geschilderten Vorteile werden daher insbesondere auch im Bereich der Auflagefläche für den Ventilkörper realisiert.

Erfindungsgemäß ist vorgesehen, dass der Ventilkörper in einer Schließstellung zumindest teilweise auf den segmentierten Auflageflächen aller Ventilsitzsegmente aufliegt. Dadurch wird die Beanspruchung durch den Ventilkörper gleichmäßig auf alle Segmente verteilt. Bei einer bevorzugten Ausführungsform sind zwei Ventilsitzsegemente vorgesehen.

Die Verbohrung des Aufnahmekörpers ist erfindungsgemäß vereinfacht, indem zwischen den Ventilsitzsegmenten ein Druckmitteldurchlass vorgesehen wird. Mit anderen Worten entfällt die Verbohrung von Kanälen oder Kanalabschnitten, indem diese Bestandteile bei der Herstellung der Ventilsitzsegmente einfach spanlos durch Umformen, Drücken oder Prägen mitgestaltet werden. Gleichzeitig wird der Bauraum, welcher üblicherweise in dem Aufnahmekörper für die Erstellung der entsprechenden Kanalbohrungen vorzusehen ist, eingespart.

Es ist weiterhin von Vorteil, wenn der genannte Druckmitteldurchlass längs einer Trennfuge zwischen den beiden Ventilsitzsegmenten vorgesehen ist. Denn im Bereich einer Trennfuge lassen sich die gewünschten Umform- und Prägeoperationen besonders vorteilhaft ausführen. Es wird weiterhin ermöglicht, lediglich bestimmte Ventilsitzsegmente einer kanalartigen Prägung oder Ausnehmung zu unterziehen, während andere der Ventilsitzsegmente prägungslos hergestellt werden können. Schließlich ist es ohne weiteres möglich, alle Ventilsitzsegmente mit der kanalartigen Prägung zu versehen.

Um eine korrekte Lage der Ventilsitzsegmente relativ zueinander zu ermöglichen, ist vorgesehen, dass die Ventilsitzsegmente mit Zentrierelementen zur gegenseitigen Ausrichtung versehen sind. Bei der Zentrierung kann es sich um eine Innen- oder Außenzentrierung handeln. Beispielsweise weist wenigstens ein Ventilsitzsegment einen Zapfen auf, welcher in einer Bohrung eines anderen Ventilsitzsegmentes aufgenommen ist. Generell ist die Art und Weise der gegenseitigen Ausrichtung oder Zentrierung jedoch mit unterschiedlichsten Mitteln denkbar.

Erfindungsgemäß sind die Ventilsitzsegmente in einer Stufenbohrung eines Aufnahmekörpers verstemmt vorgesehen.

Eine besonders bauraumverdichtete Variante der Erfindung verfügt über eine reduzierte Baulänge und wenige Bauteile, indem wenigstens eines der Ventilsitzsegmente zwecks Begrenzung eines Arbeitsraumes bereichsweise napfförmig ausgebildet ist, und wobei der Kolben zumindest partiell sowie in einer Totpunktlage von dem napfförmigen Bereich umgriffen wird.

In weiterer Ausgestaltung der Erfindung ist vorgesehen, dass in die Bohrung für die Ventilsitzsegmente wenigstens je ein Druckkanal und je ein Saugkanal einmünden, wobei die Kanäle zueinander koaxial oder zueinander parallel ausgerichtet sowie rechtwinklig zu einer Bewegungsachse eines Kolbens angeordnet sind.

Die Erfindung wird nachstehend anhand der Zeichnung erläutert, welche ein bevorzugtes Ausführungsbeispiel der Erfindung in größerem Maßstab zeigt:
Fig. 1a eine Fördervorrichtung im Schnitt,
Fig. 1b eine Einzelheit der Fig. 1a in größerem Maßstab,
Fig. 2 eine weitere Ausführungsform im Schnitt, und
Fig. 3 - 9 ein Rückschlagventil in einer weiteren besonderen Ausgestaltung sowie in stark vergrößertem Maßstab.

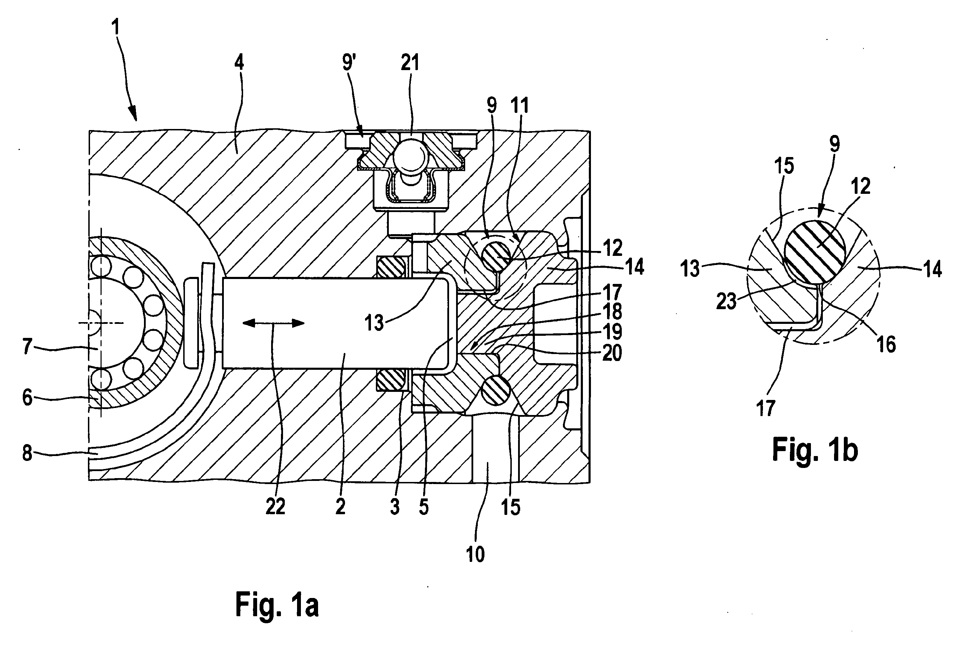

Die Fig. 1a zeigt eine Fördervorrichtung 1 deren Kolben 2 in einer abgestuften Bohrung 3 eines Aufnahmekörpers 4 bewegbar geführt angeordnet ist, welcher Bestandteil eines mit einer elektronischen Regeleinheit (ECU) versehenen elektrohydraulischen Aggregates ist. Die Führung des Kolbens 2 erfolgt unmittelbar direkt in dem Aufnahmekörper 4, oder in einer, in die Bohrung 3 eingesetzte Laufbuchse. Auch eine kombinierte Lösung ist denkbar.

Der Aufnahmekörper 4 weist ferner nicht dargestellte, elektromagnetisch ansteuerbare Ventile sowie diese miteinander verbindende, nicht gezeigte Kanäle auf, welche es erlauben, Druckmittel zur kontrollierten Druckerhöhung aus einem Arbeitsraum 5 in einen nicht gezeichneten Druckmittelspeicher oder in nicht verdeutlichte Fahrzeugbremsen zu fördern. Dadurch wird eine Fahrzeugregelbremsung, oder ein Regeleingriff wie beispielsweise ein Fahrstabilitätsregeleingriff (ESP) oder ein anderer Regeleingriff wie insbesondere eine Schlupfregelung ermöglicht.

Der Kolben 2 liegt über ein Wälzlager 6 mittelbar mit einem Ende an einem antreibenden Exzenter 7 an, welcher von einer Welle eines nicht dargestellten Elektromotors in Rotation versetzt wird. Ein Koppelring 8 verbindet jeweils zwei gegenüberliegende Kolben miteinander, und ermöglicht dadurch eine zwangsgesteuerte Rückstellung zur Ausführung eines Saughubs, wenn sich der andere der Kolben in einem Druckhub befindet.

Ein Rückschlagventil 9 (Druckventil, Saugventil 9') dient der Ventilation des Arbeitsraumes 11, indem es eine temporäre Verbindung zwischen Arbeitsraum 5 und Druck-/Saugkanal 10, 21 ermöglicht, wenn der Druck in dem Arbeitsraum einen bestimmten Grenzwert über- oder unterschreitet. Das Rückschlagventil 9, 9' umfasst einen Ventilsitz 11 mit einem Ventilkörper 12.

Wie aus Fig. 1a hervorgeht, ist der Ventilkörper 12 0-ringartig, sowie elastisch ausgebildet, was eine gesonderte Rückstellfeder erspart. Prinzipiell ist die Erfindung jedoch auch mit anderen Ventilbauformen, die gesonderte Rückstellfedern aufweisen, denkbar.

Der Ventilsitz 11 ist aus mehreren, mindestens jedoch aus zwei, Ventilsitzsegmenten 13,14 zusammen gefügt, die in der abgestuften Bohrung 3 des Aufnahmekörpers 4 angeordnet sind. Die beiden Ventilsitzsegmente 13,14 sind im wesentlichen zylindrisch ausgebildet und definieren gemeinsam eine V-förmige, und ringförmig umlaufende Nut oder Kerbe 15, in der der elastische, ringförmige Ventilkörper 12 vorgespannt vorgesehen ist, um in einer Grundstellung eine Auslassöffnung 16 zu verschließen. Dadurch ist der Ventilsitz 11 in einer Ebene, die rechtwinklig zu der Bewegungsachse des Ventilkörpers aufgespannt ist, geteilt ausgeführt. Unter der Wirkung einer Druckdifferenz wird der Ventilkörper 12 von seinem Ventilsitz 11 abgehoben.

Die Auflageflächen für den Ventilkörper 12 sind ebenfalls segmentiert ausgebildet. Dadurch liegt der Ventilkörper 12 - in einer Grundstellung - jeweils zumindest teilweise auf den Auflageflächen beider Ventilsitzsegmente 13, 14 auf.

Längs einer Trennfuge zwischen den Ventilsitzsegmenten 13,14 erstreckt sich ein Druckmitteldurchlass 17. Der Druckmitteldurchlass 17 ist durch wenigstens eine Ausnehmung in einem der Ventilsitzsegmente 13,14 gebildet. Diese Ausnehmung kann beispielsweise durch einfaches Einkerben oder Prägen erfolgen. Dazu bieten sich spanlose Kaltschlagverfahren an, die über den Vorteil verfügen, dass keinerlei scharfkantige Späne entstehen, welche den elastischen Ventilkörper 12 beschädigen könnten. Für größere Durchflussquerschnitte kann es vorgesehen sein, beide Ventilsitzsegmente 13,14 zur Bildung eines vergrößerten Kanalquerschnittes mit gegenüberliegenden Kerben zu versehen. In weiterer Abwandlung der Erfindung können mehrere Druckmitteldurchlässe 17 vorgesehen werden, um vergrößerte Durchflussraten zu ermöglichen.

Wie weiterhin aus der Fig. 1a hervorgeht, sind die Ventilsitzsegmente 13,14 zylindrisch-buchsenförmig, und bis auf den integrierten Druckmitteldurchlass 17 rotationssymmetrisch ausgebildet. Zentrierelemente 18 dienen einer gegenseitigen Ausrichtung. Bei der bevorzugten Ausführungsform weist wenigstens ein Ventilsitzsegment 14 einen Zapfen 19 auf, welcher in einer Bohrung 20 des anderen Ventilsitzsegmentes 13 aufgenommen ist.

Eine besonders geringe axiale Baulänge der Fördervorrichtung 1 wird erreicht, indem auf eine Rückstellfeder im Arbeitsraum verzichtet wird. Statt dessen ist der Koppelring 8 vorgesehen. Ein weiterer Beitrag zur Miniaturisierung besteht darin, dass eines der Ventilsitzsegmente 13 zwecks Begrenzung des Arbeitsraumes 5 bereichsweise napfförmig ausgebildet ist, und dass der Kolben 2 zumindest partiell sowie in einer Totpunktlage von dem napfförmigen Bereich umgriffen wird. Dadurch taucht der Kolben 2 zumindest teilweise in das Ventilsitzsegment 13 ein. Dennoch ist eine relativ dicke Wandstärke der Ventilsitzsegmente 13,14 möglich, was die Verzugsfestigkeit unterstützt.

Im weiteren mündet in die Bohrung 3 für die Ventilsitzsegmente 13,14 wenigstens je ein Druckkanal 10 und je ein Saugkanal 21. Die beiden Kanäle 10,21 sind zueinander koaxial, oder wie in der Fig. 1a ersichtlich zueinander parallel ausgerichtet sowie rechtwinklig zu einer Bewegungsachse 22 von dem Kolben 2.

Die Fig. 1b verdeutlicht die folgende Besonderheit. Zwischen dem Ventilkörper 12 und der Auflagefläche sind bewusste Undichtigkeiten in Form von Bypasskanälen 23 vorgesehen. Jeder Bypasskanal 23 umgeht folglich das Rückschlagventil 9, und verbindet die Druckseite mit dem Arbeitsraum 5. Durch diese Maßnahme wird eine gezielte Leckage eingestellt, die dazu führt, dass Druckstöße und Pulsationen verringert werden können.

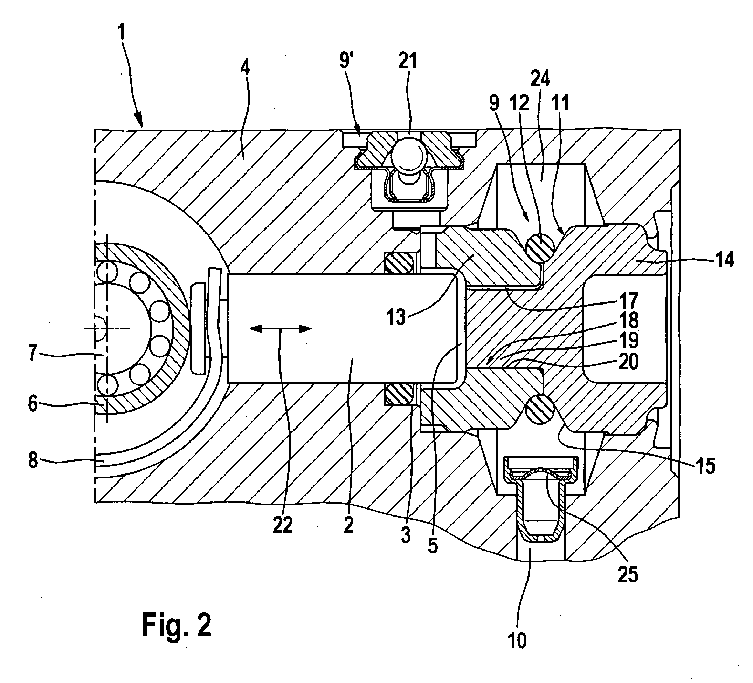

In der Fig. 2 ist eine abgewandelte Ausführungsform dargestellt. Mit Fig. 1 übereinstimmende Merkmale sind mit übereinstimmenden Bezugsziffern gekennzeichnet. Im Unterschied zu der Fig. 1a ist eine ringförmige Dämpfungskammer 24 vorgesehen, welche das Rückschlagventil 9 umgibt. Dem Druckkanal 10 ist ein Filter oder Sieb 25 vorgeschaltet.

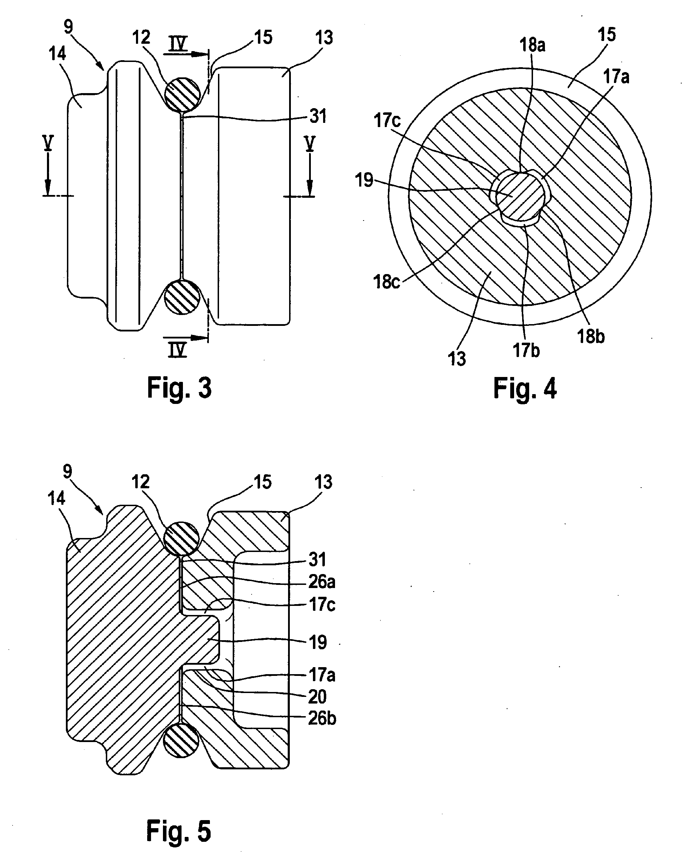

Den Figuren 3 bis 9 sind Einzelheiten bei einer Ausführungsform von einem Rückschlagventil entnehmbar, dessen Kanalführung und Ventilsitzgestaltung besonders widerstandsarm und für die Verwendung von einem elastischen, o-ringartigen Ventilkörper 12 optimiert worden ist. Merkmale die mit den vorstehenden Figuren übereinstimmen sind mit übereinstimmenden Bezugsziffern gekennzeichnet.

Eine erste Besonderheit dieser strömungsoptimierten Ausführungsform ist insbesondere aus Fig. 4 ersichtlich und besteht darin, dass der axial gerichtete, und in einer Trennfuge zwischen den Ventilsitzsegmenten 13,14 angeordnete Druckmitteldurchlass 17 vervielfacht ist. Eine ungerade Anzahl von Druckmitteldurchlässen ist aus nachstehenden Gründen besonders zu empfehlen. Vorzugsweise sind drei regelmäßig verteilte Druckmitteldurchlässe 17a,17b,17c vorgesehen. Die Druckmitteldurchlässe 17a,17b,17c sind in ihrem Querschnitt - insbesondere auch in Umfangsrichtung - derart groß ausgebildet, dass jeweils zwischen benachbarten Druckmitteldurchlässen 17a,17b,17c gerade noch hinreichend Platz für die regelmäßig vorgesehenen Zentrierelemente 18a,18b,18c vorliegt. Die Zentrierelemente 18a,18b,18c wiesen demzufolge ebenfalls eine ungerade Anzahl auf. Aus Fig. 4 ist deutlich ersichtlich, dass schwerpunktmäßig eine großer Durchflussquerschnitt ermöglicht wird. Die Verwendung einer ungeraden Anzahl von Druckmitteldurchlässen 17a,17b,17c und Zentrierelementen 18a,18b,18c ist besonders hervorzuheben, weil dies eine kostengünstige und dennoch präzise und statisch bestimmte Zentrierung der beiden Ventilsitzsegmente 13,14 zueinander ermöglicht. In einer einfachsten Ausführungsform sind daher jeweils drei der vorgenannten Merkmale vorzusehen.

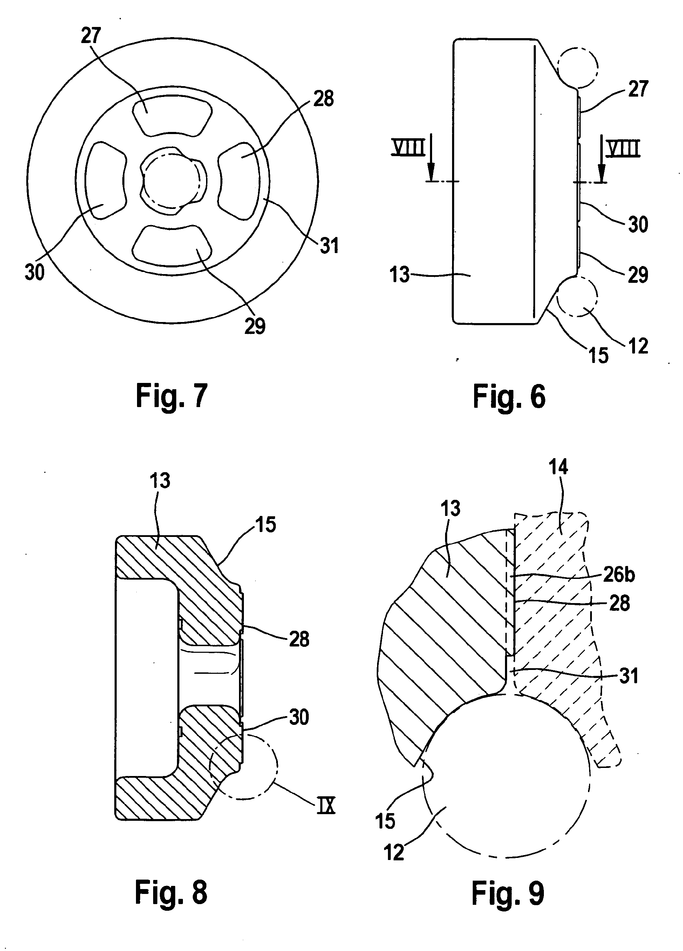

Eine zweite Besonderheit der Ausführungsform nach den Figuren 3 bis 9 besteht darin, dass Radialabschnitte 26a,26b der Druckmitteldurchlässe 17a,17b,17c ermöglicht werden, indem stirnseitig zwischen den Ventilsitzsegmenten regelmäßig verteilte Anschläge 27,28,29,30 vorgesehen sind, die in Axialrichtung vorstehen. Die Anschläge können eine gerade oder ungerade Anzahl aufweisen. Vorzugsweise sind die Anschläge an einem der Ventilsitzsegmente 13,14 angeordnet, so dass das benachbarte Ventilsitzsegment 13,14 mit einer planen Anschlagfläche versehen werden kann. In den Figuren 6,7,8 und 9 sind die genannten Anschläge 27,28,29,30 besonders deutlich zu erkennen.

Eine Dritte Besonderheit, die insbesondere aus Fig. 9 hervorgeht, trägt zu einer gesteigerten Dauerfestigkeit des elastischen Ventilkörpers 12 bei. Demnach münden die einzelnen Radialabschnitte 26a,26b noch vor dem Ventilkörper in einen umlaufenden Ringkanal 31 der es ermöglicht, dass die Druckdifferenz nicht punktuell sondern flächig an dem Ventilkörper 12 angreift. Diese Maßnahme trägt erheblich zu Lebensdauersteigerung des Ventilkörpers 12 bei und reduziert weiterhin den Strömungswiderstand.

Bezugszeichenliste:
- 1: Fördervorrichtung
- 2: Kolben
- 3: Bohrung
- 4: Aufnahmekörper
- 5: Arbeitsraum
- 6: Wälzlager
- 7: Exzenter
- 8: Koppelring
- 9,9': Rückschlagventil
- 10: Druckkanal
- 11: Ventilsitz
- 12: Ventilkörper
- 13: Ventilsitzsegment
- 14: Ventilsitzsegment
- 15: Kerbe
- 16: Auslaßöffnung
- 17,a,b,c: Druckmitteldurchlass
- 18,a,b,c: Zentrierelement
- 19: Zapfen
- 20: Bohrung
- 21: Saugkanal
- 22: Bewegungsachse
- 23: Bypasskanal
- 24: Dämpfungkammer
- 25: Filter
- 26a,b: Radialabschnitt
- 27,28,29,30: Anschlag
- 31: Ringkanal

## Patentansprüche

1. Fördervorrichtung einer Fahrzeugbremsanlage, zum Fördern von Druckmittel in wenigstens eine Fahrzeugbremse, oder zum Fördern von Druckmittel in einen Druckmittelspeicher, oder zum Fördern von Druckmittel in einen Hauptbremszylinder, mit wenigstens einem, in einer abgestuften Bohrung (3) eines Aufnahmekörpers (4), der Bestandteil eines mit einer elektronischen Regeleinheit versehenen elektrohydraulischen Aggregates ist, bewegbar angeordneten Kolben (2) zur Verdrängung von Druckmittel aus einem Arbeitsraum (5), sowie mit wenigstens einem Rückschlagventil (9,9') zur Ventilation des Arbeitsraumes (5), und zur temporären Abtrennung einer hydraulischen Verbindung zwischen dem Ar-, beitsraum (5) und einem hydraulischen Kanal, wobei das Rückschlagventil (9,9') zumindest einen Ventilsitz (11) und einen Ventilkörper (12) aufweist, der ein elastischer, ringförmig vorgespannter O-Ring ist, und wobei der Ventilsitz (11) aus mehreren Ventilsitzsegmenten (13,14) zusammengefügt ist, welche in der abgestuften Bohrung (3) des Aufnahmekörpers (4) angeordnet sind, **dadurch gekennzeichnet, dass** die Ventilsitzsegmente (13,14) eine segmentierte Auflagefläche für den Ventilkörper (12) aufweisen, der in einer Schließstellung zumindest teilweise auf den segmentierten Auflageflächen aller Ventilsitzsegmente (13,14) aufliegt, und dass zwischen den Ventilsitzsegmenten (13,14) ein Druckmitteldurchlass (17) vorgesehen ist.

2. Fördervorrichtung nach Anspruch 1, **dadurch gekennzeichnet, dass** zwei Ventilsitzsegmente (13,14) vorgesehen sind.

3. Fördervorrichtung nach Anspruch 1, **dadurch gekennzeichnet, dass** der Druckmitteldurchlass (17) längs einer Trennfuge zwischen den beiden Ventilsitzsegmenten (13,14) vorgesehen ist.

4. Fördervorrichtung nach Anspruch 1 oder 3, **dadurch gekennzeichnet, dass** der Druckmitteldurchlass (17) mittels wenigstens einer Ausnehmung in einem der Ventilsitzsegmente (13,14) gebildet ist.

5. Fördervorrichtung nach Anspruch 1 oder 3, **dadurch gekennzeichnet, dass** der Druckmitteldurchlass (17) durch Ausnehmungen in allen Ventilsitzsegmenten (13,14) gebildet ist.

6. Fördervorrichtung nach einem der Ansprüche 1, 3 bis 5, **dadurch gekennzeichnet, dass** eine ungerade Anzahl von Druckmitteldurchlässen (17a,17b,17c) vorgesehen ist.

7. Fördervorrichtung nach einem der Ansprüche 1, 3 bis 6, **dadurch gekennzeichnet, dass** zwischen den Ventilsitzsegmenten (13,14) Anschläge (27,28,29,30) vorgesehen sind, um Radialabschnitte (26a,26b) der Druckmitteldurchlässe (17a,17b,17c) auszubilden.

8. Fördervorrichtung nach Anspruch 7, **dadurch gekennzeichnet, dass** die Radialabschnitte (26a,26b) in einen umlaufenden Ringkanal (31) einmünden, um eine flächige Ventilkörperbeanspruchung zu ermöglichen.

9. Fördervorrichtung nach Anspruch 5, **dadurch gekennzeichnet, dass** die Ventilsitzsegmente (13, 14) als Kaltschlagteile ausgebildet sind, und dass die Ausnehmungen als Prägungen vorgesehen sind.

10. Fördervorrichtung nach Anspruch 1, **dadurch gekennzeichnet, dass** die Ventilsitzsegmente (13,14) mit Zentrierelementen (18,a,b,c) zur gegenseitigen Ausrichtung versehen sind.

11. Fördervorrichtung nach Anspruch 10, **dadurch gekennzeichnet, dass** eine ungerade Anzahl von Zentrierelementen (18a,18b,18c) vorgesehen ist, und dass die Zentrierelemente (18a,18b,18c) in Umfangsrichtung zwischen Druckmitteldurchlässen (17a,17b,17c) angeordnet sind.

12. Fördervorrichtung nach Anspruch 10, **dadurch gekennzeichnet, dass** wenigstens ein Ventilsitzsegment (14) einen Zapfen (19) aufweist, welcher in einer Bohrung (20) des anderen Ventilsitzsegmentes (13) aufgenommen ist.

13. Fördervorrichtung nach Anspruch 1, **dadurch gekennzeichnet, dass** die Ventilsitzsegmente (13,14) in der abgestuften Bohrung (3) des Aufnahmekörpers (4) vorgesehen sind.

14. Fördervorrichtung nach Anspruch 1, **dadurch gekennzeichnet, dass** eines der Ventilsitzsegmente (13) zwecks Begrenzung des Arbeitsraumes (5) bereichsweise napfförmig ausgebildet ist, und dass der Kolben (2) zumindest partiell sowie in einer Totpunktlage von dem napfförmigen Bereich umgriffen wird.

15. Fördervorrichtung nach Anspruch 13, **dadurch gekennzeichnet, dass** in die Bohrung (3) für die Ventilsitzsegmente (13,14) wenigstens je ein Druckkanal (10) und je ein Saugkanal (21) einmünden, wobei die Kanäle zueinander koaxial oder zueinander parallel ausgerichtet sowie rechtwinklig zu einer Bewegungsachse (22) des Kolbens (2) angeordnet sind.

## Claims

1. Feed device of a vehicle brake system for feeding pressure medium into at least one vehicle brake, or for feeding pressure medium into a pressure medium accumulator, or for feeding pressure medium into a master brake cylinder, having at least one piston (2), which is movably arranged in a stepped bore (3) of a holding body (4) which is a constituent part of an electrohydraulic unit provided with an electronic regulating unit, for displacing pressure medium out of a working chamber (5), and having at least one check valve (9, 9') for ventilating the working chamber (5) and for temporarily blocking a hydraulic connection between the working chamber (5) and a hydraulic duct, with the check valve (9, 9') having at least one valve seat (11) and one valve body (12) which is an elastic, annularly preloaded O-ring, and with the valve seat (11) being assembled from a plurality of valve seat segments (13, 14) which are arranged in the stepped bore (3) of the holding body (4), **characterized in that** the valve seat segments (13, 14) have a segmented contact surface for the valve body (12) which, in a closed position, bears at least partially against the segmented contact surfaces of all the valve seat segments (13, 14), and **in that** a pressure medium passage (17) is provided between the valve seat segments (13, 14).

2. Feed device according to Claim 1, **characterized in that** two valve seat segments (13, 14) are provided.

3. Feed device according to Claim 1, **characterized in that** the pressure medium passage (17) is provided along a parting joint between the two valve seat segments (13, 14) .

4. Feed device according to Claim 1 or 3, **characterized in that** the pressure medium passage (17) is formed by means of at least one recess in one of the valve seat segments (13, 14).

5. Feed device according to Claim 1 or 3, **characterized in that** the pressure medium passage (17) is formed by recesses in all the valve seat segments (13, 14).

6. Feed device according to one of Claims 1, 3 to 5, **characterized in that** an uneven number of pressure medium passages (17a, 17b, 17c) is provided.

7. Feed device according to one of Claims 1, 3 to 6, **characterized in that** stops (27, 28, 29, 30) are provided between the valve seat segments (13, 14) so as to form radial sections (26a, 26b) of the pressure medium passages (17a, 17b, 17c).

8. Feed device according to Claim 7, **characterized in that** the radial sections (26a, 26b) open out into an encircling annular duct (31) so as to permit areal valve body loading.

9. Feed device according to Claim 5, **characterized in that** the valve seat segments (13, 14) are formed as drop-forged parts, and **in that** the recesses are provided as embossings.

10. Feed device according to Claim 1, **characterized in that** the valve seat segments (13, 14) are provided with centring elements (18a, b, c) for mutual alignment.

11. Feed device according to Claim 10, **characterized in that** an uneven number of centring elements (18a, 18b, 18c) is provided, and **in that** the centring elements (18a, 18b, 18c) are arranged between the pressure medium passages (17a, 17b, 17c) in the circumferential direction.

12. Feed device according to Claim 10, **characterized in that** at least one valve seat segment (14) has a peg (19) which is held in a bore (20) of the other valve seat segment (13).

13. Feed device according to Claim 1, **characterized in that** the valve seat segments (13, 14) are provided in the stepped bore (3) of the holding body (4).

14. Feed device according to Claim 1, **characterized in that** one of the valve seat segments (13) is of cup-shaped design in regions for the purpose of delimiting the working chamber (5), and **in that** the piston (2) is engaged around by the cup-shaped region at least partially and in a dead centre position.

15. Feed device according to Claim 13, **characterized in that** at least in each case one pressure duct (10) and in each case one suction duct (21) open out into the bore (3) for the valve seat segments (13, 14), with the ducts being aligned coaxially or parallel with respect to one another and at right angles to a movement axis (22) of the piston (2).

## Revendications

1. Dispositif de refoulement d'une installation de freinage d'un véhicule, pour refouler du fluide sous pression dans au moins un frein de véhicule, ou pour refouler du fluide sous pression dans un accumulateur de fluide sous pression, ou pour refouler du fluide sous pression dans un cylindre de frein principal, comprenant au moins un piston (2) disposé de manière déplaçable dans un alésage étagé (3) d'un corps de réception (4) qui fait partie d'une unité électro-hydraulique pourvue d'une unité de régulation électronique, pour déplacer du fluide sous pression depuis une chambre de travail (5), ainsi qu'au moins une soupape de non retour (9, 9') pour la ventilation de la chambre de travail (5), et pour la séparation temporaire d'une connexion hydraulique entre la chambre de travail (5) et un canal hydraulique, la soupape de non retour (9, 9') présentant au moins un siège de soupape (11) et un corps de soupape (12), qui est un joint torique élastique précontraint sous forme annulaire, et le siège de soupape (11) étant constitué de plusieurs segments de siège de soupape (13, 14) qui sont disposés dans l'alésage étagé (3) du corps de réception (4), **caractérisé en ce que** les segments de siège de soupape (13, 14) présentent une surface d'appui segmentée pour le corps de soupape (12), qui s'applique dans une position de fermeture au moins en partie sur les surfaces d'appui segmentées de tous les segments de siège de soupape (13, 14), et **en ce qu'**un passage de fluide sous pression (17) est prévu entre les segments de siège de soupape (13, 14).

2. Dispositif de refoulement selon la revendication 1, **caractérisé en ce que** l'on prévoit deux segments de siège de soupape (13, 14).

3. Dispositif de refoulement selon la revendication 1, **caractérisé en ce que** le passage de fluide sous pression (17) est prévu le long d'un joint de séparation entre les deux segments de siège de soupape (13, 14).

4. Dispositif de refoulement selon la revendication 1 ou 3, **caractérisé en ce que** le passage de fluide sous pression (17) est formé au moyen d'au moins un évidement dans l'un des segments de siège de soupape (13, 14).

5. Dispositif de refoulement selon la revendication 1 ou 3, **caractérisé en ce que** le passage de fluide sous pression (17) est formé par des évidements dans tous les segments de siège de soupape (13, 14).

6. Dispositif de refoulement selon l'une quelconque des revendications 1, 3 à 5, **caractérisé en ce que** l'on prévoit un nombre impair de passages de fluide sous pression (17a, 17b, 17c).

7. Dispositif de refoulement selon l'une quelconque des revendications 1, 3 à 6, **caractérisé en ce que** l'on prévoit entre les segments de siège de soupape (13, 14) des butées (27, 28, 29, 30) pour réaliser des portions radiales (26a, 26b) des passages de fluide sous pression (17a, 17b, 17c).

8. Dispositif de refoulement selon la revendication 7, **caractérisé en ce que** les portions radiales (26a, 26b) débouchent dans un canal annulaire périphérique (31), afin de permettre une sollicitation à plat du corps de soupape.

9. Dispositif de refoulement selon la revendication 5, **caractérisé en ce que** les segments de siège de soupape (13, 14) sont réalisés sous forme de pièces embouties à froid, et **en ce que** les évidements sont prévus sous forme de gaufrages.

10. Dispositif de refoulement selon la revendication 1, **caractérisé en ce que** les segments de siège de soupape (13, 14) sont pourvus d'éléments de centrage (18a,b,c) pour leur orientation mutuelle.

11. Dispositif de refoulement selon la revendication 10, **caractérisé en ce que** l'on prévoit un nombre impair d'éléments de centrage (18a, 18b, 18c) et **en ce que** les éléments de centrage (18a, 18b, 18c) sont disposés dans la direction périphérique entre les passages de fluide sous pression (17a, 17b, 17c).

12. Dispositif de refoulement selon la revendication 10, **caractérisé en ce qu'**au moins un segment de siège de soupape (14) présente un tourillon (19) qui est reçu dans un alésage (20) de l'autre segment de siège de soupape (13).

13. Dispositif de refoulement selon la revendication 1, **caractérisé en ce que** les segments de siège de soupape (13, 14) sont prévus dans l'alésage étagé (3) du corps de réception (4).

14. Dispositif de refoulement selon la revendication 1, **caractérisé en ce que** l'un des segments de siège de soupape (13) est réalisé en partie en forme de cuvette afin de limiter la chambre de travail (5) et **en ce que** le piston (2) est au moins en partie saisi circonférentiellement et dans une position de point mort par la région en forme de cuvette.

15. Dispositif de refoulement selon la revendication 13, **caractérisé en ce qu'**au moins à chaque fois un canal de pression (10) et un canal d'aspiration (21) débouchent dans l'alésage (3) pour les segments de siège de soupape (13, 14), les canaux étant orientés coaxialement l'un par rapport à l'autre ou parallèlement l'un à l'autre et étant disposés à angle droit par rapport à un axe de déplacement (22) du piston (2).
